# EUROPEAN PATENT APPLICATION

(11) **EP 2 381 052 A2**
(43) Date of publication of application: **26.10.2011**
(21) Application number: 11163284.0
(22) Date of filing: 20.04.2011
(51) Int. Cl.: E04H 12/10, F03D 11/04, G06F 17/50

(54) **Support tower for use with a wind turbine and system for designing support tower**

(30) Priority: 23.04.2010 US 766615
(71) Applicant: General Electric Company, Schenectady, NY 12345 (US)
(72) Inventor: Zheng, Danian, Greenville, SC 29615 (US); Willey, Lawrence Donald, Denver, CO 80202 (US); Fang, Biao, Schenectady, NY 12345 (US); Haridasu, Balaji, 560066, Karnataka (IN); VadlamudiI, Venkata Krishna, 560066, Karnataka (IN)
(74) Representative: Bedford, Grant Richard

(57) **Abstract**

A lattice tower (12) for use with a wind turbine (10) is provided. The lattice tower includes at least one support extending from a supporting surface (14), at least one cross-support member (42) coupled to the support to form the lattice tower, and a reinforcement assembly (62) coupled to the support to transfer at least a portion of a bending load and a torsional load induced to the support to the reinforcement assembly to facilitate reducing a local distortion of the support.

## Description

The subject matter described herein relates generally to wind turbines and, more particularly, to a support tower for use with a wind turbine.

At least some known wind turbines include a nacelle fixed atop a tower. The nacelle includes a rotor assembly coupled to a generator through a shaft. In known rotor assemblies, a plurality of blades extend from a rotor. The blades are oriented such that wind passing over the blades turns the rotor and rotates the shaft, thereby driving the generator to generate electricity.

At least some known wind turbines include lattice-type support towers that include a plurality of vertical support legs, cross beams, and joints that couple the cross beams to the vertical support legs. At least some known lattice-type support towers include open frame vertical support legs that are subject to large cyclic loading, which results in a large displacement of leg members and increased bending stresses and torsional stresses induced to the leg members due, in part, to a lack of cross-section hoop stiffness. At least some known lattice-type support towers have vertical support legs that include a cross-section having an increased material mass and stiffness to facilitate reducing bending and torsional stresses and displacement.

In one aspect according to the present invention, a lattice tower for use with a wind turbine is provided. The lattice tower includes at least one support extending from a supporting surface. At least one cross-support member is coupled to the support to form the lattice tower. A reinforcement assembly is coupled to the support to transfer at least a portion of a bending load and a torsional load induced to the support to the reinforcement assembly to facilitate reducing a local distortion of the support.

In another aspect, a wind turbine is provided. The wind turbine includes a nacelle, a rotor rotatably coupled to the nacelle, and a lattice tower coupled to the nacelle for supporting the nacelle a distance from a supporting surface. The lattice tower includes at least one support extending from a supporting surface. At least one cross-support member is coupled to the support to form the lattice tower. A reinforcement assembly is coupled to the support to transfer at least a portion of a bending load and a torsional load induced to the support to the reinforcement assembly.

In yet another aspect, a method of designing a tower for a wind turbine is provided. The method includes acquiring, from a data collection system, a first element data representative of a plurality of members that form the tower. A first baseline performance data based at least in part on the acquired first element data is calculated by a structural design system. At least one first member with a calculated baseline performance data less than a predefined performance data is identified. A second element data representative of a reinforcement member selectively coupled to the first member to facilitate improving baseline performance data is identified.

Various aspects and embodiments of the present invention will now be described in connection with the accompanying drawings, in which:
FIG. 1 is a perspective view of an exemplary wind turbine.
FIG. 2 is a cross-sectional view of an exemplary support leg suitable for use with the wind turbine shown in FIG. 1.
FIG. 3 is an enlarged perspective view of the support leg shown in FIG. 2.
FIGS. 4-7 are partial cross-sectional views of alternative embodiments of support legs suitable for use with the wind turbine shown in FIG. 1.
FIG. 8 is a partial perspective view of an alternative support leg suitable for use with the wind turbine shown in FIG. 1.
FIG. 9 is a partial cross-sectional view of an alternative support leg shown in FIG. 8.
FIG. 10 is a block diagram of a computing system suitable for use in designing the wind turbine shown in FIG. 1.
FIG. 11 is a block diagram showing an exemplary server computer device for use with the system shown in FIG. 10.
FIG. 12 is a block diagram showing an exemplary user computer device for use with the system shown in FIG. 10.
FIG. 13 is a flow chart showing an exemplary method for designing a tower suitable for use with the wind turbine shown in FIG. 1.

Various of the embodiments described herein facilitate assembling a wind turbine support tower. More specifically, the embodiments described herein include a reinforcement assembly that facilitates reducing bending and torsional stresses induced to support legs of the wind turbine tower from environmental loads, and facilitates reducing horizontal displacement of the wind turbine tower. Additionally, the reinforcement assembly described herein facilitates reducing a local distortion of the support legs. As used herein, the term "local distortion" refers to variations in a structural cross-sectional shape of a structural member due to bending stresses.

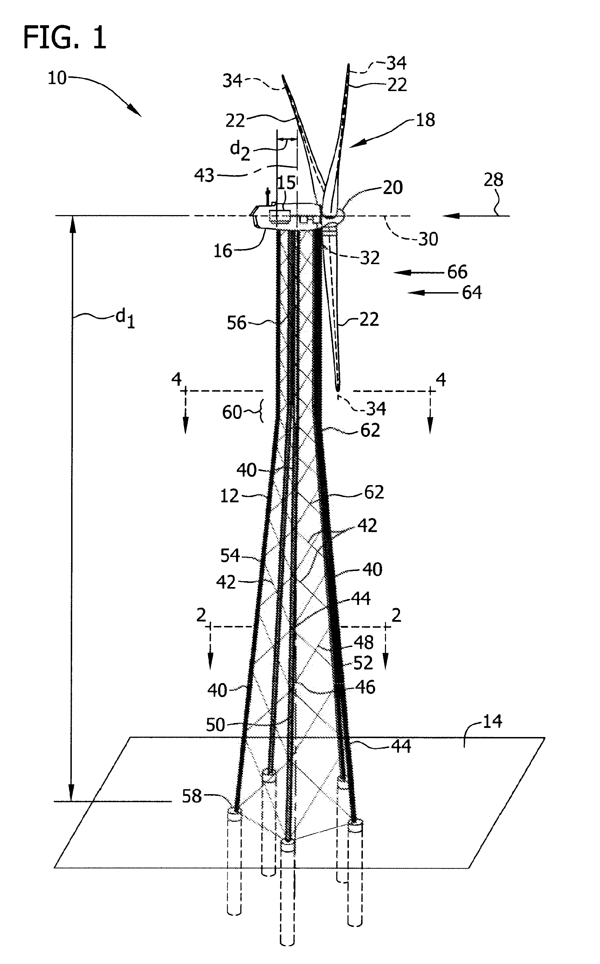

FIG. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a support surface 14, a nacelle 16 mounted on tower 12, a generator 15 positioned within nacelle 16, and a rotor 18 that is rotatably coupled to generator 15. Rotor 18 includes a rotatable hub 20 and at least one rotor blade 22 coupled to and extending outward from hub 20. In the exemplary embodiment, rotor 18 includes three rotor blades 22. In an alternative embodiment, rotor 18 includes more or less than three rotor blades 22.

Rotor blades 22 are spaced about hub 20 to facilitate rotating rotor 18 to enable kinetic energy to be transferred from the wind into usable mechanical energy, and subsequently, electrical energy. In the exemplary embodiment, rotor blades 22 have a length ranging from about 30 meters (m) (99 feet (ft)) to about 120 m (394 ft). Alternatively, rotor blades 22 may have any suitable length that enables wind turbine 10 to function as described herein. For example, other non-limiting examples of rotor blade lengths include 10 m or less, 20 m, 37 m, or a length that is greater than 120 m. As wind strikes rotor blades 22 from a direction 28, rotor 18 is rotated about an axis of rotation 30. As rotor blades 22 are rotated and subjected to centrifugal forces, rotor blades 22 are also subjected to various forces and moments. As such, rotor blades 22 may deflect and/or rotate from a neutral, or non-deflected, position to a deflected position. Moreover, a pitch angle or blade pitch of rotor blades 22, i.e., an angle that determines a perspective of rotor blades 22 with respect to direction 28 of the wind, may be changed by a pitch adjustment system 32 to control the load and power generated by wind turbine 10 by adjusting an angular position of at least one rotor blade 22 relative to wind vectors.

In the exemplary embodiment, tower 12 is a lattice-type tower that includes two or more vertical support legs 40 and at least one cross-member 42 extending between vertical support legs 40 to form tower 12. Vertical support legs 40 extend between support surface 14 and nacelle 16 and define a vertical axis 43. Cross-member 42 is coupled to vertical support legs 40 at a cross-support region 44. In one embodiment, at least one cross-member 42 extends obliquely between a first vertical support leg 50 and a second vertical support leg 52. In the exemplary embodiment, tower 12 includes five vertical support legs 40. In an alternative embodiment, tower 12 includes more or less than five vertical support legs 40.

In the exemplary embodiment, at least one vertical support leg 40 includes a first or lower support member 54 and a second or upper support member 56. Lower support member 54 is coupled to a base 58 that is positioned at or near support surface 14. Lower support member 54 extends upward from base 58 towards upper support member 56. Upper support member 56 is coupled to and extends between lower support member 54 and nacelle 16 such that nacelle 16 is supported from tower 12 and is positioned a distance d₁ above support surface 14.

In the exemplary embodiment, lower support member 54 extends obliquely from support surface 14 and is coupled to upper support member 56 at a transition region 60. Upper support member 56 extends substantially vertically from lower support member 54 towards nacelle 16.

Tower 12 further includes at least one reinforcement assembly 62 coupled to at least one vertical support leg 40 for facilitating reducing a bending loading and torsional loading induced to vertical support leg 40 from wind forces (represented by arrow 64) and to facilitate reducing a local distortion of vertical support leg 40. Reinforcement assembly 62 is further configured to facilitate reducing a horizontal displacement and/or rotational displacement of tower 12. In the exemplary embodiment, reinforcement assembly 62 is coupled to vertical support leg 40 at or near cross-support region 44 and/or transition region 60. Reinforcement assembly 62 is selectively positioned along a length of vertical support leg 40 between support surface 14 and nacelle 16. In one embodiment, reinforcement assembly 62 is coupled to vertical support leg 40 at any location along tower 12 to enable wind turbine 10 to operate as described herein. In an alternative embodiment, reinforcement assembly 62 is coupled to vertical support leg 40 along the full length of vertical support leg 62 extending from support surface 14 to nacelle 16.

During operation of wind turbine 10, wind acting on wind turbine 10 imparts wind forces 64 that are partly transformed into rotational energy and partly into a bending load (represented by arrow 66) tending to bend tower 12 in the direction of wind forces 64 and displace nacelle 16 a distance d₂ from vertical axis 43. Bending load 66 tending to displace vertical support leg 40 in a horizontal direction and/or rotational direction is imparted to vertical support leg 40 from wind forces 64, such that bending and torsional stresses are induced to vertical support leg 40. Vertical support leg 40 transfers such bending and torsional stresses at least partly to reinforcement assembly 62, such that vertical support leg 40 is subjected to reduced bending and torsional loading during operation of wind turbine 10. Reinforcement assembly 62 is configured to facilitate increasing a stiffness strength in tower 12 to facilitate reducing a horizontal displacement and/or rotational displacement of tower 12 when subjected to wind forces 64.

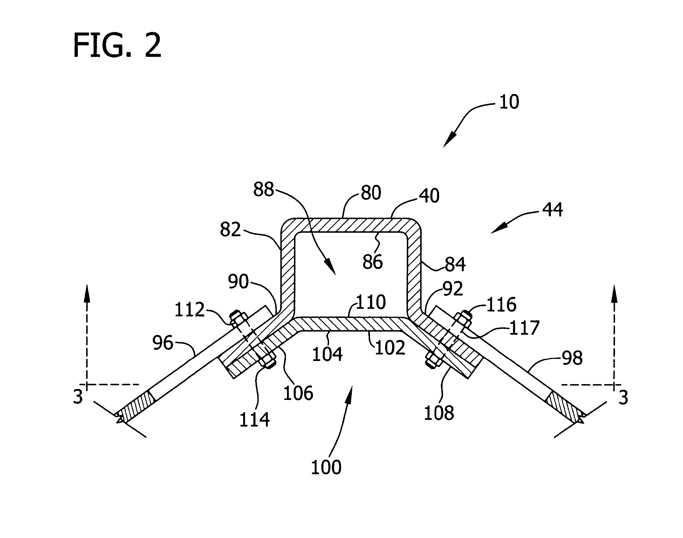

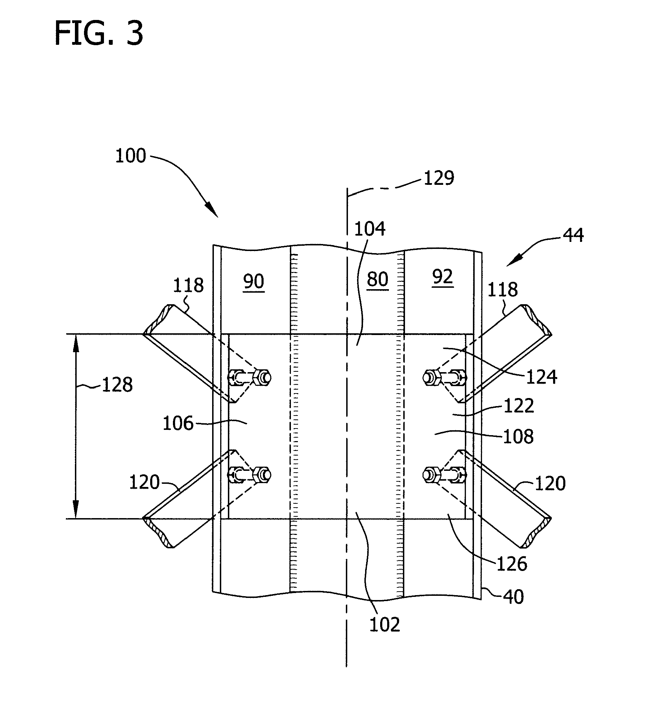

FIG. 2 is a cross-sectional view of a portion of an exemplary vertical support leg 40 along sectional line 2-2 at or near cross-support region 44 in FIG. 1. FIG. 3 is an enlarged perspective view of vertical support leg 40 along sectional line 3-3 in FIG. 2. Identical components shown in FIG. 2 and FIG. 3 are labeled with the same reference numbers used in FIG. 1. In the exemplary embodiment, cross-support region 44 includes a reinforcement assembly 100 coupled to vertical support leg 40. Vertical support leg 40 includes a base member 80, a first arm 82, and an opposing second arm 84. First arm 82 is coupled to or integrated with base member 80 and extends substantially perpendicularly outward from base member 80. Second arm 84 is coupled to or integrated with base member 80 and extends outwardly from base member 80 substantially parallel to first arm 82, such that first arm 82 and second arm 84 are in an opposing relationship. In the exemplary embodiment, first arm 82 and second arm 84 extend from base member 80 such that vertical support leg 40 includes an inner surface 86 that at least partially defines a cavity 88. A first wing wall 90 is coupled to or integrated with first arm 82 and extends obliquely outward from first arm 82. A second wing wall 92 is coupled to or integrated with second arm 84 and extends obliquely outward from second arm 84 such that first wing wall 90 and second wing wall 92 extend away from one another. At least one first cross-member 96 is coupled to and extends outwardly from first wing wall 90. At least one second cross-member 98 is coupled to and extends outwardly from second wing wall 92.

In the exemplary embodiment, reinforcement assembly 100 includes a first reinforcement member 102 coupled to vertical support leg 40. First reinforcement member 102 includes a flange 104, a first flange extension 106, and an opposing second flange extension 108. Flange 104 is coupled to vertical support leg 40 such that an inner surface 110 of flange 104 extends between first arm 82 and second arm 84 and further defines cavity 88 between inner surface 110 and vertical support leg inner surface 86. First flange extension 106 extends outwardly from flange 104 substantially parallel to first wing wall 90. Second flange extension 108 extends outwardly from flange 104 substantially parallel with second wing wall 92. In the exemplary embodiment, at least one bolt 112 is inserted through a cooperating first opening 114 defined through first flange extension 106, first wing wall 90, and first cross-member 96 to fixedly couple first reinforcement member 102 to vertical support leg 40 and first cross-member 96. Similarly, at least one bolt 116 is inserted through a cooperating second opening 117 defined through second flange extension 108, second wing wall 92, and second cross-member 98 to fixedly couple first reinforcement member 102 to vertical support leg 40 and second cross-member 98. In an alternative embodiment, bolt 112 is inserted through cooperating first opening 114 defined through first flange extension 106 and first wing wall 90 to fixedly coupled first reinforcement member 102 to vertical support leg 40. Similarly, bolt 116 is inserted through cooperating second opening 117 defined through second flange extension 108 and second wing wall 92 to fixedly couple first reinforcement member 102 to vertical support leg 40. In a further alternative embodiment, first reinforcement member 102 is coupled to vertical support leg 40 using at least one of a weld, a fastener, a restraint clip, and any other suitable fastening member.

Referring to FIG. 3, in the exemplary embodiment, cross-support region 44 includes at least one first or upper cross-member 118, and at least one second or lower cross-member 120. In this embodiment, upper cross-member 118 extends obliquely from vertical support leg 40 towards nacelle 16. Lower cross-member 120 extends obliquely from vertical support leg 40 towards support surface 14. First reinforcement member 102 includes a first end portion 124, an opposing second end portion 126, and a length 128 that extends along a longitudinal axis 129 defined between first end portion 124 and second end portion 126. First end portion 124 extends towards nacelle 16 and overlaps at least a portion of upper cross-member 118 to facilitate coupling upper cross-member 118 to first reinforcement member 102. Second end portion 126 extends towards support surface 14 and overlaps at least a portion of lower cross-member 120 to facilitate coupling lower cross-member 120 to first reinforcement member 102.

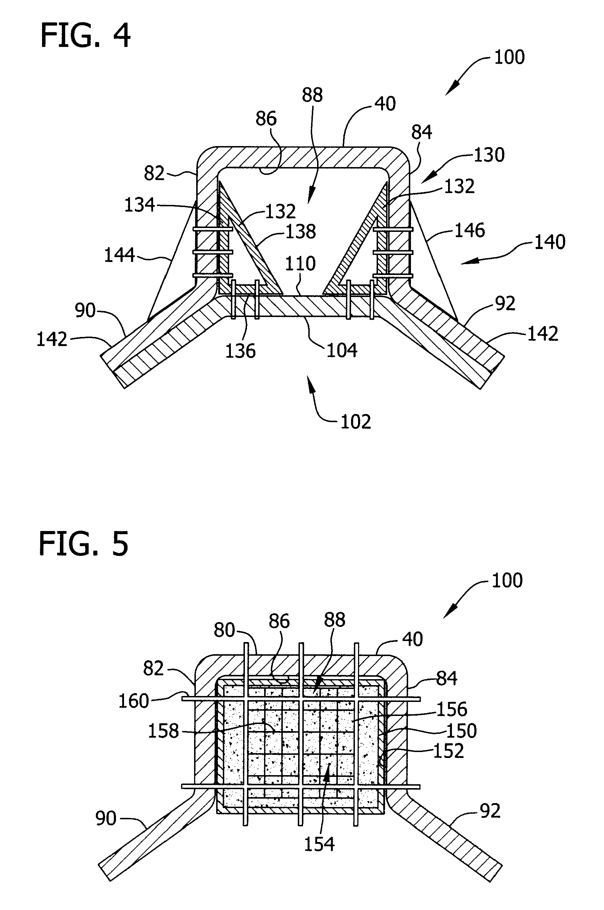

FIGS. 4-7 are partial cross-sectional views of alternative embodiments of vertical support leg 40 shown in FIG. 2. Identical components shown in FIGS. 4-7 are labeled with the same reference numbers used in FIG. 2. Referring to FIG. 4, in an alternative embodiment, reinforcement assembly 100 includes first reinforcement member 102, and a second reinforcement member 130. Second reinforcement member 130 includes at least one stiffener 132 positioned within cavity 88. Stiffener 132 is coupled to vertical support leg inner surface 86 and/or first reinforcement member inner surface 110. In one embodiment, stiffener 132 includes a first stiffening member 134 coupled to first arm 82, a second stiffening member 136 coupled to flange 104, and a third stiffening member 138 coupled between first stiffening member 134 and second stiffening member 136. In one embodiment, reinforcement assembly 100 includes a third reinforcement member 140 coupled to an outer surface 142 of vertical support leg 40. In this embodiment, third reinforcement member 140 includes a first outer stiffener 144 coupled to first arm 82 and first wing wall 90, and a second outer stiffener 146 coupled to second arm 84 and second wing wall 92.

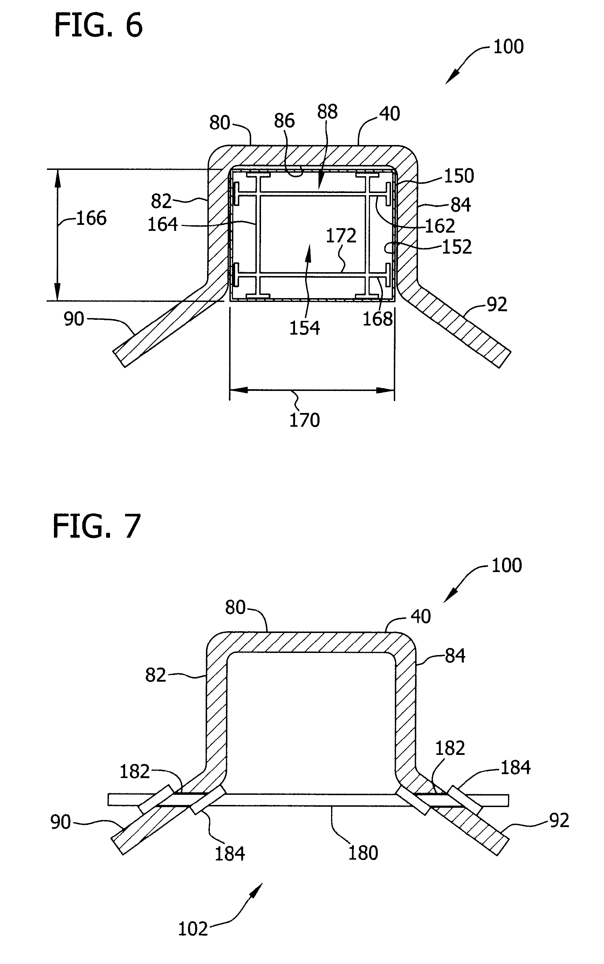

Referring to FIG. 5 and FIG. 6, in an alternative embodiment, reinforcement assembly 100 includes a reinforcement box 150 positioned within cavity 88. In one embodiment, reinforcement box 150 is coupled to inner surface 86. Reinforcement box 150 includes an inner surface 152 that defines a cavity 154. In one embodiment, reinforcement assembly 100 includes a high density, high compressive strength material 156, such as concrete positioned within cavity 154 to facilitate increasing a buckling strength of vertical support leg 40. One or more reinforcing bars 158 are positioned within cavity 154 and coupled to material 156 to facilitate increasing a tensile strength of material 156. In this embodiment, at least one stud 160 extends through reinforcement box 150 and vertical support leg 40 to securely couple reinforcement box 150 to vertical support leg 40. In an alternative embodiment, reinforcement box 150 is coupled to vertical support leg 40 using at least one of a weld, a fastener, a restraint clip, and any other suitable fastening member. Referring to FIG. 6, in an alternative embodiment, reinforcement assembly 100 includes one or more channel supports 162 positioned within reinforcement box cavity 154. In one embodiment, at least one first channel support 164 extends along a length 166 of reinforcement box 150 and at least one second channel support 168 extends along a width 170 of reinforcement box 150. In an alternative embodiment, first channel support 164 is oriented substantially perpendicular to second channel support 168. In one embodiment, at least one channel support 162 includes a body 172 that extends along at least a portion of reinforcement assembly length 128 (shown in FIG. 3).

Referring to FIG. 7, in an alternative embodiment, first reinforcement member 102 includes at least one support bar 180 that extends between first wing wall 90 and second wing wall 92. In this alternative embodiment, support bar 180 is inserted through openings 182 defined through first wing wall 90 and second wing wall 92. One or more fasteners 184 are coupled to support bar 180 to facilitate tensioning support bar 180 to facilitate reducing movement of first wing wall 90 and second wing wall 92.

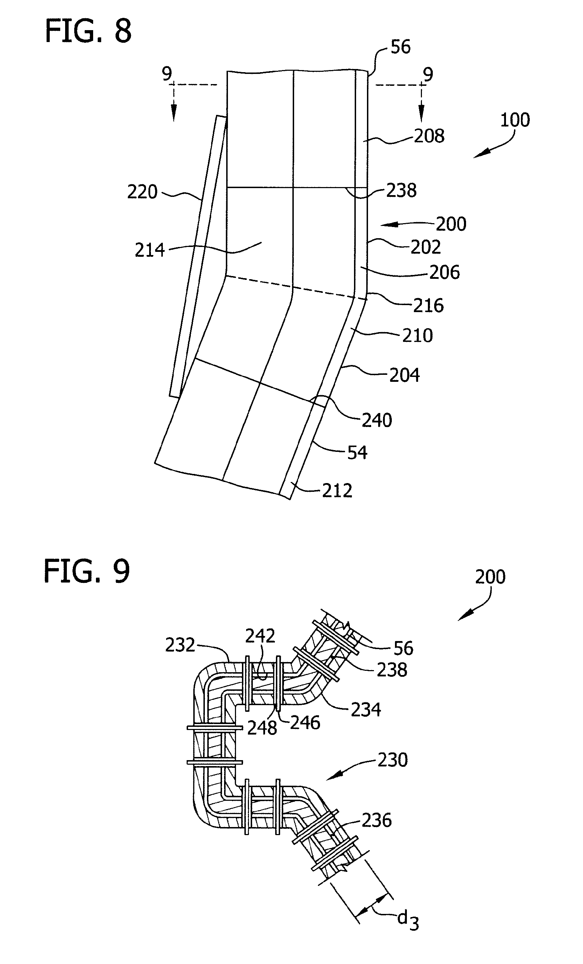

FIG. 8 is a partial perspective view of an alternative vertical support leg 40 along sectional line 4-4 at or near transition region 60 shown in FIG. 1. FIG. 9 is a partial cross-sectional view of tower 12 (shown in FIG. 1) along sectional line 9-9 shown in FIG. 8. Identical components shown in FIG. 8 and FIG. 9 are labeled with the same reference numbers used in FIG. 1. In an alternative embodiment, reinforcement assembly 100 includes a transition member 200 between lower support member 54 and upper support member 56. Transition member 200 includes a first portion 202 and a second portion 204. First portion 202 is coupled to upper support member 56. Second portion 204 is coupled to lower support member 54. First portion 202 has a cross-sectional shape that is substantially similar to a cross-sectional shape of upper support member 56. Second portion 204 has a cross-sectional shape that is substantially similar to a cross-sectional shape of lower support member 54. First portion 202 includes an outer surface 206 that is oriented substantially flush with an outer surface 208 of upper support member 56. Second portion 204 includes an outer surface 210 that is oriented obliquely with outer surface 206 and is oriented substantially flush with an outer surface 212 of lower support member 54. Transition member 200 further includes a middle portion 214 extending between first portion 202 and second portion 204. Middle portion 214 includes an arcuate outer surface 216. In one embodiment, transition member 200 has a substantially circular cross-sectional shape. In another alternative embodiment, transition member 200 has a substantially square cross-sectional shape. In a further alternative embodiment, reinforcement assembly 100 includes one or more tie-rod brackets 220 coupled to and extending between upper support member 56 and lower support member 54.

Referring to FIG. 9, in another alternative embodiment, transition member 200 includes a reinforcement socket 230 that includes an outer member 232 and an inner member 234 positioned a distance d₃ from outer member 232 to define a cavity 236. In this alternative embodiment, first portion 202 defines an opening 238 (shown in FIG. 8) sized to receive upper support member 56. Second portion 204 defines a second opening 240 (shown in FIG. 8) sized to received lower support member 54. At least a portion of upper support member 56 is inserted into cavity 236 such that an inner surface 242 of first portion 202 overlaps at least a portion of upper support member outer surface 208. At least a portion of lower support member 54 is inserted into cavity 236 such that an inner surface (not shown) of second portion 204 overlaps at least a portion of lower support member outer surface 212. At least one first fastener 246 is inserted through at least one first opening 248 extending through outer member 232, inner member 234, and upper support member 56 to facilitate coupling transition member 200 to upper support member 56. At least one second fastener (not shown) is inserted through at least one second opening (not shown) extending through outer member 232, inner member 234, and lower support member 54 to facilitate coupling transition member 200 to lower support member 54.

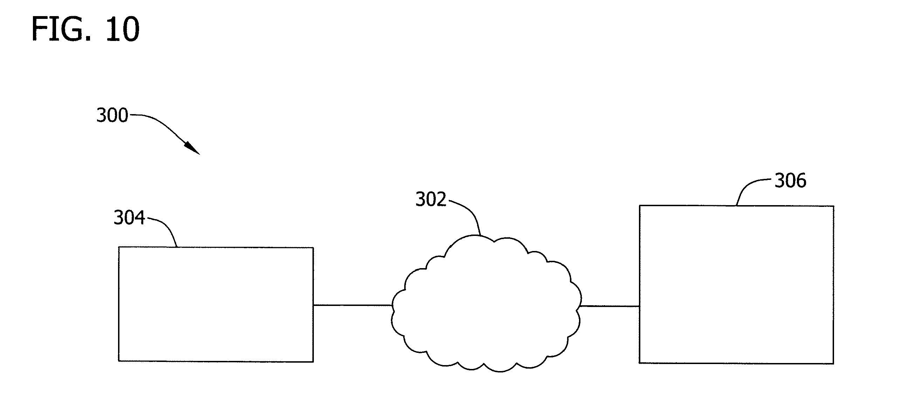

FIG. 10 is a block diagram showing an exemplary computing system 300 suitable for use in designing wind turbine 10. Computing system 300 includes a network 302, a user computer device 304 and a structural design system 306. For example, network 302 may include, without limitation, the Internet, a local area network (LAN), a wide area network (WAN), a wireless LAN (WLAN), a mesh network, and/or a virtual private network (VPN).

User computer device 304 and structural design system 306 communicate with each other and/or network 302 using a wired network connection (e.g., Ethernet or an optical fiber), a wireless communication means, such as radio frequency (RF), an Institute of Electrical and Electronics Engineers (IEEE) 802.11 standard (e.g., 802.11(g) or 802.11(n)), the Worldwide Interoperability for Microwave Access (WIMAX) standard, a cellular phone technology (e.g., the Global Standard for Mobile communication (GSM)), a satellite communication link, and/or any other suitable communication means. WIMAX is a registered trademark of WiMax Forum, of Beaverton, Oregon. IEEE is a registered trademark of Institute of Electrical and Electronics Engineers, Inc., of New York, New York.

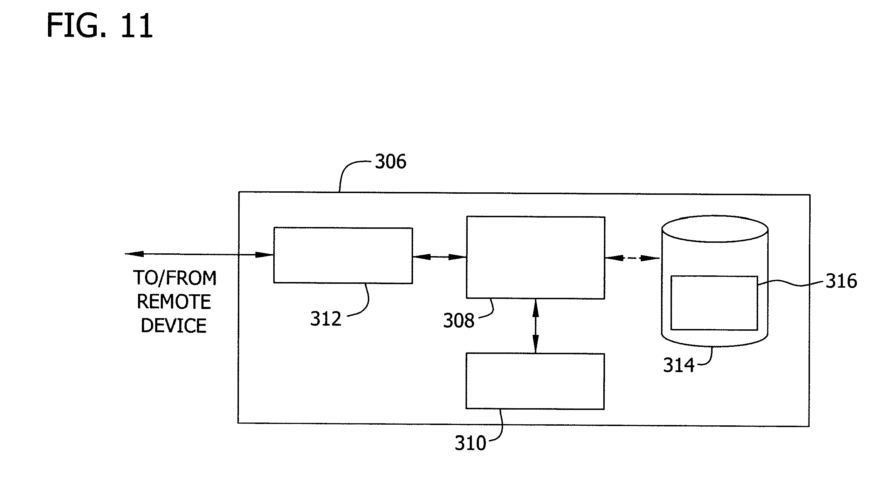

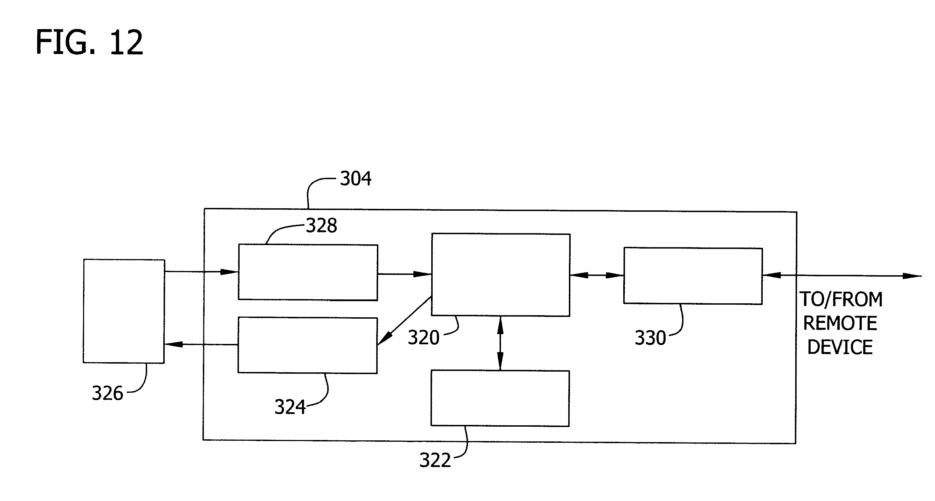

Each of user computer device 304 and structural design system 306 includes a processor, as described herein with reference to FIGS. 11 and 12. A processor may include a processing unit, such as, without limitation, an integrated circuit (IC), an application specific integrated circuit (ASIC), a microcomputer, a programmable logic controller (PLC), and/or any other programmable circuit. A processor may include multiple processing units (e.g., in a multicore configuration). Each of user computer device 304 and structural design system 306 is configurable to perform the operations described herein by programming the corresponding processor. For example, a processor may be programmed by encoding an operation as one or more executable instructions and providing the executable instructions to the processor by embodying the executable instructions in a memory area (also shown in FIGS. 11 and 12) coupled to the processor. A memory area may include, without limitation, one or more random access memory (RAM) devices, one or more storage devices, and/or one or more computer readable media.

FIG. 11 is a block diagram showing a structural design system 306 for use with system 300. In the exemplary embodiment, structural design system 306 includes a processor 308 for executing instructions, a memory area 310 configured to store the instructions, and a data collection system 314. Instructions may be provided for executing structural design system applications including, without limitation, a wind turbine tower structural modeling system and/or a wind turbine tower performance system.

Processor 308 is operatively coupled to a communication interface 312 such that structural design system 306 is capable of communicating with a remote device, such as one or more user computer devices 304. Processor 308 may also be operatively coupled to data collection system 314. Data collection system 314 is any computer-operated hardware suitable for storing and/or retrieving data. In some embodiments, data collection system 314 is integrated in structural design system 306. For example, structural design system 306 may include one or more hard disk drives as data collection system 314. In other embodiments, data collection system 314 is external to structural design system 306 and may be accessed by a plurality of structural design systems 306. In one embodiment, data collection system 314 includes a database 316 for storing wind turbine data, including, without limitation, wind turbine tower attributes, wind turbine attributes, and/or wind turbine tower performance data.

In the exemplary embodiment, structural design system 306 is configured to store wind turbine element data in memory area 310 and/or data collection system 314. Wind turbine element data includes one or more element data that is representative of structural components of wind turbine 10, for example, such as tower 12, nacelle 16, and rotor 18. Wind turbine element data include wind turbine attributes, such as an identification attribute (e.g., a name), a dimensional attribute (e.g., a rotor disc area and/or a tower height), a component attribute (e.g., a set of included structural components), an environmental attribute (e.g. wind condition, such as wind direction and/or wind speed), a structural element attribute (e.g., weight of structural components, moment of inertia, width and length of component, modulus of elasticity of component, material properties of component), and/or a performance attribute (e.g. component loading, bending loading, bending stresses, torsional stresses, and/or and torsional loading).

In the exemplary embodiment, wind turbine element data includes shell elements representative of vertical support legs 40, cross-members 42, and/or reinforcement assembly 62. In an alternative embodiment, wind turbine element data includes three-dimensional data elements representative of vertical support legs 40, cross-members 42, and/or reinforcement assembly 62. In the exemplary embodiment, data collection system 314 is configured to receive wind turbine element data from user computing device 304.

FIG. 12 is a block diagram showing an exemplary user computer device 304 for use with system 300. User computer device 304 includes a processor 320 for executing instructions. In some embodiments, executable instructions are stored in a memory area 322. Memory area 322 is any device allowing information, such as executable instructions and/or other data, to be stored and retrieved.

User computer device 304 also includes at least one presentation device 324 for presenting information to user 326. Presentation device 324 is any component capable of conveying information to user 326. Presentation device 324 may include, without limitation, a display device (e.g., a liquid crystal display (LCD), organic light emitting diode (OLED) display, or "electronic ink" display) and/or an audio output device (e.g., a speaker or headphones). In some embodiments, presentation device 324 includes an output adapter, such as a video adapter and/or an audio adapter. An output adapter is operatively coupled to processor 320 and configured to be operatively coupled to an output device, such as a display device or an audio output device.

In some embodiments, user computer device 304 includes an input device 328 for receiving input from user 326. Input device 328 may include, for example, a keyboard, a pointing device, a mouse, a stylus, a touch sensitive panel (e.g., a touch pad or a touch screen), a gyroscope, an accelerometer, a position detector, and/or an audio input device. A single component, such as a touch screen, may function as both an output device of presentation device 324 and input device 328. User computer device 304 also includes a communication interface 330, which is configured to be coupled in communication with network 302 and/or structural design system 306.

Stored in memory area 322 are, for example, computer readable instructions for providing a user interface to user 326 via presentation device 324 and, optionally, receiving and processing input from input device 328. A user interface may include, among other possibilities, a web browser and/or a client application. Web browsers and client applications enable users, such as user 326, to display and interact with media and other information from a remote device, such as structural design system 306.

In the exemplary embodiment, data collection system 314 is configured to receive wind turbine element data from user computing device 304. Structural design system 306 is configured to acquire first wind turbine element data that is representative of a plurality of structural members of wind turbine 10 that includes tower 12 including vertical support leg 40 and/or cross-member 42, nacelle 16, rotor 18, and/or rotor blades 22. In the exemplary embodiment, structural design system 306 is configured to calculate a baseline performance data for each structural member. In one embodiment, structural design system 306 is configured to calculate the baseline performance data using finite element analysis. Structural design system 306 is further configured to calculate a deflection, a deformation, a bending stress, and/or a torsional stress of each structural member of tower 12. In one embodiment, baseline performance data is calculated using a maximum loading scenario that includes applying a maximum probable wind force 64 to tower 12 along direction 28. In an alternative embodiment, baseline performance data is calculated using a fatigue loading scenario that includes selectively applying a wind force to tower 12 over a predefined period of time. In another alternative embodiment, baseline performance data is calculated using a rotational loading scenario that includes selectively applying a wind force at a plurality of directions about an outer perimeter of tower 12.

In the exemplary embodiment, structural design system 306 is configured to compare the baseline performance of each structural member with a predefined baseline performance.

Structural design system 306 is further configured to identify a structural member with a baseline performance that is less than the predefined performance. In one embodiment, structural design system 306 is configured to identity second wind turbine element data that is representative of a reinforcement assembly 62 that improves the baseline performance of the structural member when reinforcement assembly 62 is coupled to the structural member. Structural design system 306 is further configured to calculate a second baseline performance data based on the first element data and the second element data and verify the second baseline performance is equal to or greater than the predefined baseline performance. If the second baseline performance is less than the predefined baseline performance, structural design system 306 is configured to identify a third wind turbine element data that is representative of an alternative embodiment of reinforcement assembly 62, calculate a third baseline performance data based on the first element data and the third element data and verify the third baseline performance is equal to or greater than the predefined baseline performance.

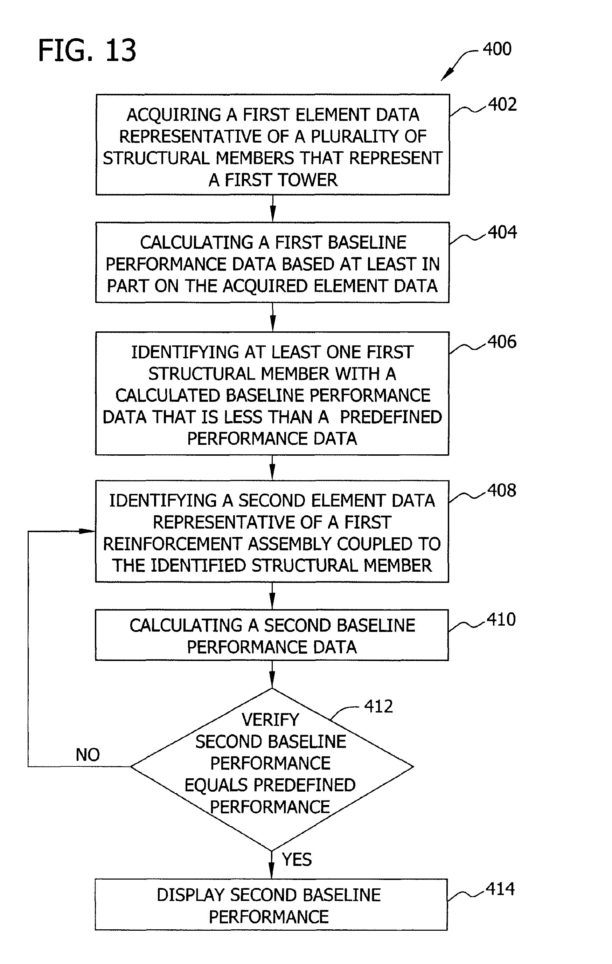

FIG. 13 is a flow chart of an exemplary method 400 of designing a tower, such as tower 12, for use with wind turbine 10 using system 300. In the exemplary embodiment, method 400 includes acquiring 402 a first element data representative of a plurality of structural members that form a tower. In one embodiment, the first element data includes one of three-dimension data elements and shell elements representative of vertical support legs 40 and/or cross-members 42. In the exemplary embodiment, a first baseline performance data is calculated 404 based at least in part on the acquired element data. In one embodiment, baseline performance data is calculated 404 using one of a maximum loading, a fatigue loading, and a rotating loading. In an alternative embodiment, a first baseline performance data is calculated 404 to include at least one of a deflection, a deformation, a bending stress, and/or torsional stress of each of the plurality of structural members. In the exemplary embodiment, at least one first structural member with a calculated baseline performance data that is less than a predefined performance data is identified 406. A second element data representative of a first reinforcement assembly selectively coupled to the identified structural member is identified 408 to facilitate improving baseline performance data of the tower. In one embodiment, a second baseline performance data is calculated 410 based at least in part on a first element data and the second element data. The second baseline performance data is verified 412 to be equal to or greater than a predefined performance data. If the second baseline performance data is not equal to or greater than the predefined performance data, method step 408 is performed using a third element data representative of a second reinforcement assembly coupled to the identified structural member. If the second baseline performance data is equal to or greater than the predefined performance data, second baseline performance data is displayed 414 from user computing device 304.

An exemplary technical effect of various of the methods and systems described herein includes at least one of: (a) acquiring, by a structural design system, a first element data representative of a plurality of members that represent a first tower; (b) calculating, by a structural design system, a first baseline performance data based at least in part on the acquired element data; (c) identifying at least one first member with a calculated baseline performance data that is less than a predefined performance data; (d) identifying a second element data representative of a first reinforcement assembly coupled to the identified member to facilitate improving baseline performance data.

Various of the above-described systems and methods facilitate assembling a support tower that facilitates reducing a displacement of a wind turbine during operation. More specifically the support tower described herein includes a reinforcement assembly that is coupled to a tower support member to facilitate reducing stress induced to support tower members from wind loads. In addition, by providing a reinforcement assembly, a support tower may be assembled using support members that include a reduced cross-sectional thickness and material stiffness, thereby reducing the overall costs of manufacturing the support tower. As such, the cost of assembling a wind turbine is significantly reduced.

Exemplary embodiments of a support tower for use with a wind turbine and a system for designing the support tower are described above in detail. The systems and methods are not limited to the specific embodiments described herein, but rather, components of the systems and/or steps of the methods may be utilized independently and separately from other components and/or steps described herein. For example, the methods may also be used in combination with wind turbine support systems, and are not limited to practice with only the support towers as described herein. Rather, the exemplary embodiment can be implemented and utilized in connection with many other wind turbine support systems.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A lattice tower for use with a wind turbine, said lattice tower comprising:
   at least one support extending from a supporting surface;
   at least one cross-support member coupled to said support to form said lattice tower; and,
   a reinforcement assembly coupled to said support to transfer at least a portion of a bending load and a torsional load induced to said support to said reinforcement assembly to facilitate reducing a local distortion of the support.
2. A lattice tower in accordance with clause 1, wherein said reinforcement assembly comprises a first reinforcement member coupled to said support to define a cavity therebetween.
3. A lattice tower in accordance with any preceding clause, wherein said reinforcement assembly comprises a second reinforcement member positioned within said cavity, said second reinforcement member coupled to said support.
4. A lattice tower in accordance with any preceding clause, wherein said support has an inner surface defining a cavity, and said reinforcement assembly comprises a reinforcement box positioned within said cavity and a high compressive strength material positioned within said reinforcement box.
5. A lattice tower in accordance with any preceding clause, wherein said support has an inner surface defining a cavity, and said reinforcement assembly comprises a reinforcement box positioned within said cavity and at least one channel support coupled to an inner surface of said reinforcement box.
6. A lattice tower in accordance with any preceding clause, wherein said support comprises:
   a base;
   a first wing wall;
   and an opposing second wing wall, each of said first wing wall and said second wing wall extending outward from said base, said reinforcement assembly comprising a support rod extending between said first wing wall and said second wing wall.
7. A lattice tower in accordance with any preceding clause, wherein said support comprises an upper support member and a lower support member, said reinforcement assembly comprising a transition member coupled between said upper support member and said lower support member, said transition member having an arcuate outer surface between an upper portion and a lower portion.
8. A lattice tower in accordance with any preceding clause, wherein said transition member comprises an inner member coupled to an outer member to define a cavity, said cavity sized to receive at least a portion of said upper support member and at least a portion of said lower support member.
9. A lattice tower in accordance with any preceding clause, wherein said reinforcement assembly is selectively positioned along a length of support.
10. A wind turbine, comprising:
   a nacelle;
   a rotor rotatably coupled to said nacelle; and,
   a lattice tower coupled to said nacelle for supporting said nacelle a distance from a supporting surface, said lattice tower comprising:
      at least one support extending from the supporting surface;
      at least one cross-support member coupled to said support to form said lattice tower; and,
      a reinforcement assembly coupled to said support to transfer at least a portion of a bending load and a torsional load induced to said support to said reinforcement assembly.
11. A wind turbine in accordance with any preceding clause, wherein said reinforcement assembly comprises a first reinforcement member coupled to said support to define a cavity between an inner surface of said first reinforcement member and an inner surface of said support.
12. A wind turbine in accordance with any preceding clause, wherein said support comprises an inner surface defining a cavity, and said reinforcement assembly comprises a reinforcement box positioned within said cavity and a high compressive strength material positioned within said reinforcement box.
13. A wind turbine in accordance with any preceding clause, wherein said support comprises an upper support member and a lower support member, said reinforcement assembly comprising a transition member positioned between said upper support member and said lower support member, said transition member having an arcuate outer surface between an upper portion and a lower portion or said transition member.
14. A wind turbine in accordance with any preceding clause, wherein said transition member comprises an inner member coupled to an outer member to define a cavity sized to receive at least a portion of said upper support member and at least a portion of said lower support member.
15. A method of designing a tower for a wind turbine, said method comprising:
   acquiring, from a data collection system, a first element data representative of a plurality of members that form the tower;
   calculating, by a structural design system, a first baseline performance data based at least in part on the acquired first element data;
   identifying at least one first member with a calculated baseline performance data less than a predefined performance data; and,
   identifying a second element data representative of a reinforcement member selectively coupled to the first member to facilitate improving baseline performance data.
16. A method in accordance with any preceding clause, wherein said calculating a first baseline performance data comprises calculating a first baseline performance data with a finite element analysis method.
17. A method in accordance with any preceding clause, wherein said acquiring a first element data comprises acquiring the first element data including one of three-dimension data elements and shell elements representative of supports and cross-support members.
18. A method in accordance with any preceding clause, wherein said calculating a first baseline performance data comprises calculating the first baseline performance data including at least one of a deflection, a deformation, a bending stress, and a torsional stress of each of the plurality of members.
19. A method in accordance with any preceding clause, wherein said calculating a first baseline performance data comprises calculating a first baseline performance data using one of a maximum loading, a fatigue loading, and a rotational loading.
20. A method in accordance with any preceding clause, further comprising:
   calculating a second baseline performance data based at least in part on the first element data and the second element data; and,
   verifying that the second baseline performance data is equal to or greater than the predefined performance data.

## Claims

1. A lattice tower (12) for use with a wind turbine (10), said lattice tower comprising:
at least one support extending from a supporting surface (14);
at least one cross-support member (42) coupled to said support to form said lattice tower; and
a reinforcement assembly (62) coupled to said support to transfer at least a portion of a bending load and a torsional load induced to said support to said reinforcement assembly to facilitate reducing a local distortion of the support.

2. A lattice tower (12) in accordance with claim 1, wherein said reinforcement assembly comprises a first reinforcement member coupled to said support to define a cavity therebetween.

3. A lattice tower (12) in accordance with claim 2, wherein said reinforcement assembly (62) comprises a second reinforcement member (130) positioned within said cavity, said second reinforcement member coupled to said support.

4. A lattice tower (12) in accordance with any preceding claim, wherein said support has an inner surface (110) defining a cavity (88), and said reinforcement assembly (62) comprises a reinforcement box (150) positioned within said cavity and a high compressive strength material (156) positioned within said reinforcement box.

5. A lattice tower (12) in accordance with any preceding claim, wherein said support has an inner surface (110) defining a cavity (88), and said reinforcement assembly (62) comprises a reinforcement box (150) positioned within said cavity and at least one channel support (162) coupled to an inner surface (152) of said reinforcement box.

6. A lattice tower (12) in accordance with any preceding claim, wherein said support comprises:
a base (58);
a first wing wall (90);
and an opposing second wing wall (92), each of said first wing wall and said second wing wall extending outward from said base, said reinforcement assembly (62) comprising a support rod extending between said first wing wall and said second wing wall.

7. A lattice tower (12) in accordance with any preceding claim, wherein said support comprises an upper support member (56) and a lower support member (54), said reinforcement assembly (62) comprising a transition member (200) coupled between said upper support member and said lower support member, said transition member having an arcuate outer surface (216) between an upper portion and a lower portion.

8. A lattice tower (12) in accordance with claim 7, wherein said transition member (200) comprises an inner member (234) coupled to an outer member (232) to define a cavity (236), said cavity sized to receive at least a portion of said upper support member (56) and at least a portion of said lower support member (54).

9. A lattice tower (12) in accordance with any preceding claim, wherein said reinforcement assembly (62) is selectively positioned along a length of support.

10. A wind turbine (10), comprising:
a nacelle (16);
a rotor (18) rotatably coupled to said nacelle; and,
a lattice tower (12) coupled to said nacelle for supporting said nacelle a distance from a supporting surface (14), said lattice tower comprising:
at least one support extending from the supporting surface;
at least one cross-support member coupled to said support to form said lattice tower; and
a reinforcement assembly (62) coupled to said support to transfer at least a portion of a bending load and a torsional load induced to said support to said reinforcement assembly.
